(19) Europäisches Patentamt
European Patent Office
Office européen des brevets

(11) **EP 2 167 740 B1**

(12) **EUROPÄISCHE PATENTSCHRIFT**

(45) Veröffentlichungstag und Bekanntmachung des Hinweises auf die Patenterteilung:
**10.09.2014 Patentblatt 2014/37**

(21) Anmeldenummer: **08784716.6**

(22) Anmeldetag: **11.07.2008**

(51) Int Cl.:
***E03B 7/07*** *(2006.01)*

(86) Internationale Anmeldenummer:
**PCT/EP2008/005677**

(87) Internationale Veröffentlichungsnummer:
**WO 2009/007127 (15.01.2009 Gazette 2009/03)**

(54) **Anschlussarmatur und Wasserleitungsanlage**

Connection fitting and water supply installation

Armatur de raccordement et installation de distribution d'eau

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.07.2007 DE 202007009832 U**

(43) Veröffentlichungstag der Anmeldung:
**31.03.2010 Patentblatt 2010/13**

(60) Teilanmeldung:
**10015623.1 / 2 299 009**

(73) Patentinhaber: **Gebr. Kemper GmbH + Co. KG Metallwerke**
**57462 Olpe (DE)**

(72) Erfinder: **BLUMENTHAL, Roland**
**50374 Erftstadt (DE)**

(74) Vertreter: **Grünecker, Kinkeldey, Stockmair & Schwanhäusser**
**Leopoldstrasse 4**
**80802 München (DE)**

(56) Entgegenhaltungen:
**WO-A-02/103123      DE-A1- 3 919 074**
**DE-A1- 19 803 901    DE-U1- 29 622 519**
**JP-A- 58 137 678     US-A- 5 622 203**

## Beschreibung

Die vorliegende Erfindung betrifft eine Anschlussarmatur zum Anschließen einer Ringleitung mit mindestens einem Verbraucher an einen Stockwerks- bzw. Steigrohrstrang mit an den Strang anschließbaren Ein- und Auslassöffnungen und einer dazwischen liegenden Einfädelöffnung für die Ringleitung, der in Strömungsrichtung eine Querschnittsverengung vorgelagert ist, welche durch der Venturi-Effekt in einem Bereich der Einfädelöffnung einer niedrigen Druch erzeugt.

Im Bereich der Trinkwassertechnik, insbesondere zur Vermeidung von Verkeimung in Trinkwasserleitungen ist es bekannt, eine Anschlussarmatur der vorstehend erwähnten Art vorzusehen, die einer Abzweigarmatur in Strömungsrichtung des Stranges nachgelagert ist. An der Abzweigarmatur wird eine Teilströmung des Stranges herausgeleitet und über eine Ringleitung zu einem oder mehreren Verbrauchern geführt. Die Ringleitung mündet in der Einfädelöffnung der Anschlussarmatur. In Strömungsrichtung der Einfädelöffnung vorgelagert ist eine Querschnittsverengung, die nach Art einer Düse wirkt und zwischen der Abzweigung und der Einfädelöffnung eine Druckdifferenz bewirkt, durch welche bei einer Strömung in dem Strang auch in der Ringleitung eine Strömung erzeugt wird. Als Strang im Sinne der vorliegenden Erfindung soll jede Hauptleitung verstanden werden, unabhängig davon, ob diese sich innerhalb eines Stockwerkes erstreckt und innerhalb des Stockwerkes mehrere hintereinander angeordnete Nasszellen über jeweils eine Ringleitung mit Trink- bzw. Brauchwasser versorgt, oder als Steigrohrstrang beispielsweise in mehreren Stockwerken übereinander liegende Nasszellen miteinander verbindet.

Aus der DE 39 19 074 ist beispielsweise eine Anschlussarmatur der vorerwähnten Art als Teil eines Reinstwasserversorgungssystems bekannt. Bei dieser vorbekannten Anschlussarmatur wird die aus der Ringleitung in den Strang zurückgeführte Ringleitungsströmung mit einem Winkel von etwa 90 Grad zur Hauptströmungsrichtung in die Anschlussarmatur eingeleitet. Als Hauptströmungsrichtung wird diejenige Richtung verstanden, in der die Hauptströmung, d.h. die Strömung innerhalb des Stranges verläuft. Die aus der DE 39 19 074 bekannte Anschlussarmatur hat eine Querschnittsverengung, die nach Art einer Venturidüse wirkt und im Bereich der Einfädelöffnung einen Druck bewirkt, welcher niedriger als der Druck im Strang ist, so dass bezogen auf eine der Querschnittsverengung in Strömungsrichtung vorgelagerte Stelle der Armatur, beispielsweise an der Einlassöffnung, ein Wirkdruckverlust auftritt.

Eine weitere Anschlussarmatur ist aus der US 5,622,203 bekannt. Die Anschlussarmatur bildet einen Teil eines Warmwasserzirkulationssystems aus und verbindet die Warmwasserzirkulationsleitung mit einem öffentlichen Trinkwasserversorgungsnetz. Mit der Anschlussarmatur wird gewährleistet, dass bei Entnahme von Warmwasser an einer an das System angeschlossenen Zapfstelle unmittelbar Warmwasser zur Verfügung steht. Die Anschlussarmatur wirkt nach Art einer Venturi-Düse, die eine in Strömungsrichtung einer durch einen Spalt realisierten Einfädelöffnung der Zirkulationsleitung vorgelagerte Querschnittsverengung und eine der Einfädelöffnung in Strömungsrichtung nachgelagerte Querschnittserweiterung umfasst. Durch den Venturi-Effekt wird im Bereich der Einfädelöffnung (des Spaltes) ein niedrigerer Druck erzeugt, womit ein Sog generiert wird, der das Wasser aus der Zirkulationsleitung über den Spalt in einem Winkel von annähernd 90° wieder in die Zirkulationsleitung strömen lässt, wobei das zirkulierende Wasser mit dem Trink- oder Brauchwasser aus der öffentlichen Trinkwasser-Versorgungsnetzleitung vermischbar ist.

Praktische Versuche der Anmelderin haben ergeben, dass insbesondere bei mehreren in Hauptströmungsrichtung hintereinander angeordneten Ringleitungen der strömungsdynamischen Auslegung besondere Beachtung geschenkt werden muss. So sollte nicht nur der Druckverlust innerhalb einer Ringleitung minimiert werden, sondern darüber hinaus auch der Druckverlust jeder einzelnen, in Hauptströmungsrichtung hintereinander angeordneten Anschlussarmatur aufeinander abgestimmt werden, so dass der gewünschte Durchspülungseffekt der Ringleitungen sicher gewährleistet werden kann, um bei Wasserentnahme an einem Verbraucher eine Durchspülung sämtlicher Ringleitungen des Stranges zu bewirken. Dabei ist insbesondere darauf zu achten, dass die Druckdifferenz bei jeder einzelnen Anschlussarmatur möglichst gering wird, ohne dass die gewünschte Durchströmung der Ringleitung bei einer Strömung im Strang, beispielsweise durch Wasserentnahme an einer in Hauptströmungsrichtung dieser Ringleitung nachgeordneten Ringleitung, zum Erliegen kommt.

Die vorliegende Erfindung will eine Anschlussarmatur der eingangs genannten Art anzugeben, die im Bereich der der Anschlussarmatur zugeordneten Ringleitung zu verbesserten Strömungsverhältnissen führt. Des Weiteren soll mit der vorliegenden Erfindung eine Wasserleitungsanlage mit wenigstens einem Stockwerks- bzw. Steigrohrstrang, an dem mehrere Ringleitungen über Ausfädel- und Einfädelöffnungen angeschlossen sind, und einer zwischen den Ausfädel- und Einfädelöffnungen der zugeordneten Ringleitung im Strang vorgesehenen Querschnittsverengung angegeben werden, die in verbesserter Weise den praktischen Anforderungen gerecht wird.

Zur Lösung des ersten Aspekts des obigen Problems wird mit der vorliegenden Erfindung eine Anschlussarmatur mit dem Merkmal von Anspruch 1 angegeben.

Die vorliegende Erfindung lässt sich von der Überlegung leiten, dass die Strömung in der Ringleitung, die von der Druckdifferenz bewirkt wird, die durch die düsenartige Querschnittsverengung im Strang zwischen der Ausfädelöffnung und der Einfädelöffnung durch eine variable Durchtrittsfläche der Querschnittsverengung variiert werden kann, und zwar insbesondere in Abhängigkeit von dem Volumenstrom im Strang, d. h. dem wirksamen Druck innerhalb des Stranges. Mit der erfindungsgemäßen Ausgestaltung kann, abhängig von der Stellung eines die Querschnittsverengung variierenden Mittels, jede beliebige Strömungscharakteristik, insbesondere jede beliebige Strömungsteilung, d.h. die Verteilung auf Teilströme durch die Ringleitung einerseits und durch den Strang andererseits, erreicht werden. Hierzu können die Mittel zum Variieren der Durchschnittsfläche der Querschnittsverengung motorisch gesteuert werden. Jedes beliebige Mittel zum Variieren der Durchtrittsfläche ist denkbar. Die Durchschnittsverengung kann beispielsweise durch ein bewegliches Drosselelement bewirkt werden, welches relativ zu einer ortsfest zwischen der Ein- und Auslassöffnung im Strang vorgesehenen Querschnittsverengung ist.

Gemäß einer bevorzugten Weiterbildung ist dieses Drosselelement in seiner Ausgangsstellung, welche vorliegend diejenige Stellung angibt, bei der die maximal mögliche Querschnittsverengung im Strang erreicht wird, im Bereich der Querschnittsverengung unter Ausbildung eines Leckageströmungsspaltes gehalten. Diese bevorzugte Ausgestaltung stellt sicher, dass auch bei relativ geringen Volumenströmen im Strang ein Teilstrom durch den Strang fließt, so dass zu keiner Zeit die Gesamtströmung im Strang allein durch die Ringleitungen erfolgen kann und unter Umgehung desjenigen Längenabschnitts, der sich zwischen den Ausfädel- und Einfädelöffnungen der jeweiligen Ringleitungen befindet, was zum Verkeimen dieser Strömungsabschnitte führen würde. Die vorerwähnten geringen Strömungen im Strang können beispielsweise dann eingestellt werden, wenn der Strang auch bei Nichtbenutzung, beispielsweise durch ein endseitiges Ventil, geöffnet wird, um den jeweiligen Strang zu spülen und abgestandenes gegebenenfalls verkeimtes Wasser zu entleeren. Gemäß einer alternativen Ausgestaltung kann diese Wirkung auch dadurch erzielt werden, dass ein die Leckageströmung erlaubender Bypass im Bereich der Querschnittsverengung vorgesehen ist. Bei dieser Ausgestaltung kann das Drosselelement dichtend an der Querschnittsverengung anliegen, ohne dass die Leckageströmung behindert wird. Dementsprechend müssen nach der Weiterbildung der vorliegenden Erfindung lediglich Leckagemittel vorgesehen sein, welche die entsprechende Leckageströmung durch den Strang, d. h. eine Leckageströmung unter Ausschluss der Ringleitung ermöglichen. Bei der Verwendung einer Drossel als Mittel zum Variieren der Durchtrittsfläche sollte die Leckage so dimensioniert sein, dass bis zu einem erstmaligen Abheben des Drosselelementes von der ortsfest relativ zu einem Anschlussgehäuse vorgesehenen Strömungsverengung eine hinreichende Durchströmung sowohl der Ringleitung wie auch des durchgehenden Stranges bewirkt wird. Jede kleine Strömung innerhalb des Stranges sollte dementsprechend zu einer Durchströmung und damit Durchspülung sowohl der Ringleitung wie auch des Stranges führen.
Gemäß einer bevorzugten Weiterbildung der vorliegenden Erfindung ist die Querschnittsverengung, d. h. die in der Regel ortsfest zu dem Gehäuse der Anschlussarmatur ausgebildete Ausgestaltung durch einen Kegel gebildet, dessen in Strömungsrichtung vordere Fläche eine Düse, d.h. den engsten Querschnitt im Strang ausbildet, und dessen andere Kegelfläche vorzugsweise als Diffusor ausgebildet ist und eine Anlagefläche für eine Kegelgegenfläche bildet, die durch das Drosselelement ausgeformt wird. Zur Ausbildung einer bestimmten Stoßcharakteristik müssen die Kegelgegenfläche des Drosselelementes und die Kegelfläche des Doppelkegels nicht die gleiche Kontur und/oder Neigung aufweisen. Vielmehr können beide Flächen voneinander abweichende Konturen und/oder Neigungen haben.
Zur Beeinflussung der jeweiligen Strömungsanteile durch die Ringleitung einerseits und durch den Strang andererseits ist das Drosselelement vorzugsweise von einem Federelement unter Vorspannung gehalten, und zwar derart, dass das Drosselelement in der Ausgangslage gegen die Querschnittsverengung anliegt. Die Federcharakteristik des Federelementes kann mit Rücksicht auf die gewünschten Teilströme angepasst werden, und zwar abhängig von den Druck- bzw. Strömungsverhältnissen im Strang mit sich ändernder Gesamtströmung.
Gemäß einer weiteren bevorzugten Ausgestaltung der vorliegenden Erfindung hat das Mittel ferner ein Führungselement, welches das Drosselelement beweglich hält. Das Führungselement stützt sich vorzugsweise an der Innenumfangsfläche des Gehäuses der Anschlussarmatur ab, so dass das Drosselelement definiert innerhalb des Gehäuses gehalten und geführt ist. Im Hinblick auf eine symmetrische Durchströmung des Stranges, auch im Bereich der Querschnittsverengung, wird mit einer weiteren bevorzugten Ausgestaltung der vorliegende Erfindung vorgeschlagen, dass das Führungselement und das Drosselelement koaxial zueinander ausgerichtet sind und dass deren Längsachsen mit der Längsachse des Stranges fluchten.
Gemäß einer weiteren bevorzugten Ausgestaltung der vorliegenden Erfindung ist ein Einsatzteil vorgesehen, welches neben dem Führungselement auch einen diesem in Strömungsrichtung vorgelagerten Verengungsabschnitt ausbildet, der die Querschnittsverengung ausformt. Dementsprechend können die Mittel zum Variieren der Durchtrittsfläche der Querschnittsverengung in Form eines einheitlichen Einsatzteiles in den Strang eingebaut und verwirklicht werden. Die Mittel lassen sich dementsprechend in übliche, zylindrische Strangleitungen, von denen Ringleitungen abgehen, zum Nachrüsten einsetzen. Das Einsatzteil kann hierbei in ein Rohrleitungsstück des Stranges eingesetzt werden.
Insbesondere bei einer Erstausrüstung einer Anschlussarmatur ist es zu bevorzugen, an der Außenumfangsfläche des Einsatzteiles Arretierungsmittel vorzusehen, die dort vorzugsweise in Umfangsrichtung voneinander beabstandet vorgesehen sind. Mit diesen Arretierungsmitteln ist das Einsatzteil innerhalb des Armaturengehäuses gehalten. Die Arretierungsmittel sind vorzugsweise durch Rastnasen ausgebildet, die in an der Innenumfangsfläche des Armaturengehäuses ausgeformte Rastnuten eingreifen. Als Rastnuten sind diejenigen Ausnehmungen zu verstehen, die in Umfangsrichtung beabstandet zueinander vorgesehen sind und jeweils mit einer einzigen Rastnase zusammenwirken. Selbstverständlich können solche Rastnuten zusammenhängend in Form einer am Innenumfang des Armaturengehäuses umlaufend ausgeformten Ausnehmung realisiert sein.

Gemäß einer weiteren bevorzugten Ausgestaltung der vorliegenden Erfindung erstreckt sich das Führungselement bis in den Bereich der Einfädelöffnung, d. h. überdeckt teilweise die Einfädelöffnung im Bereich der Anschlussarmatur und bildet einen Ringleitungsströmungsdurchlass aus, der den Führungsabschnitt durchsetzt, so dass die Ringleitungsströmung durch das Führungselement hindurch in die Hauptströmung im Strang zurückgeführt werden kann.

Die in Anspruch 13 angegebene Weiterbildung bietet die Möglichkeit, innerhalb der Anschlussarmatur einen sogenannten Inliner zu führen, der üblicherweise als Zirkulationsrohr bei einer Rohr-in-Rohr-Zirkulationsleitung vorgesehen ist und in der Regel warmes Wasser zum Verbraucher führt. Dementsprechend eignet sich die Anschlussarmatur nach dieser Weiterbildung insbesondere für eine Warmwasserzirkulationsanlage.

Das Innenrohr wird gemäß einer weiteren bevorzugten Ausgestaltung vorzugsweise genutzt, das Drosselelement verschieblich zu führen. Dabei kann beispielsweise zwischen der Außenumfangsfläche des Innenrohres und dem verschieblich darauf gelagerten Drosselelement eine Leckageströmung erlaubt werden, die auch durch die Durchtrittsfläche der Querschnittsverengung hindurchtritt, wenn sich das Drosselelement in seiner Ausgangslage befindet.

Zur Verwirklichung des Ringleitungs-Strömungsdurchlasses wird gemäß einer weiteren bevorzugten Ausgestaltung der vorliegenden Erfindung vorgeschlagen, das Führungselement an wenigstens einem seiner stirnseitigen Enden mit mehreren Stützstegen zu versehen, die die Außenumfangsfläche vorgeben und sich in axialer Richtung erstrecken. In Umfangsrichtung benachbarte Stützstege bilden einen Spalt, durch den die eingeführte Ringleitungsströmung das Führungselement in radialer Richtung in Bezug auf die Längsachse des Stranges passieren kann. An dem stirnseitigen Ende sind die entsprechenden Stützstege vorzugsweise trichterförmig ausgebildet, wodurch das Einbringen des Innenrohres bei der Montage der Anschlussarmatur erleichtert wird.

Die Ansprüche 16 und 17 geben bevorzugte strömungsmäßige Dimensionierungen der Anschlussarmatur an, die sich in der Praxis als zweckmäßige Weiterbildungen erwiesen haben.

Zur Lösung des Problems wird hinsichtlich der Wasserleitungsanlage eine solche Anlage mit den Merkmalen von Anspruch 18 vorgeschlagen. Diese umfasst Mittel zum Variieren der Durchtrittsfläche der Querschnittsverengung. Diese müssen nicht notwendigerweise als Teil einer Anschlussarmatur ausgebildet sein, welche die Einfädelöffnung ausbildet. Allerdings sind diese Mittel der Querschnittsverengung zugeordnet, d. h. zwischen der jeweiligen Ausfädelöffnung und der jeweiligen Einfädelöffnung einer zugeordneten Ringleitung vorgesehen.

Weitere Vorteile und Einzelheiten der vorliegenden Erfindung ergeben sich aus der nachfolgenden Beschreibung eines Ausführungsbeispiels in Verbindung mit der Zeichnung.

In dieser zeigen:

Fig. 1   eine perspektivische Ansicht eines Einsatzteiles des Ausführungsbeispiels mit dem Strömungseingang in der Ausgangsstellung des Drosselelementes;

Fig. 2   eine perspektivische Seitenansicht gemäß Fig. 1 in der voll geöffneten Stellung des Einsatzteiles;

Fig. 3   eine perspektivische Seitenansicht des in Fig. 1 gezeigten Einsatzteiles mit dem Strömungsausgang;

Fig. 4   eine Längsschnittansicht durch einen Teil eines Stranges im Bereich der Anschlussarmatur bei einem Drosselelement in der Ausgangslage;

Fig. 5   die in Fig. 4 gezeigte Ansicht bei voll geöffnetem Drosselelement;

Fig. 6   das in Fig. 5 eingekreiste Detail C in vergrößerter Darstellung und

Fig. 7   eine Graphik mit einem Vergleich der Strömungscharakteristik in der Ringleitung in Abhängigkeit von der Druckdifferenz zwischen Ausfädel- und Einfädelöffnung

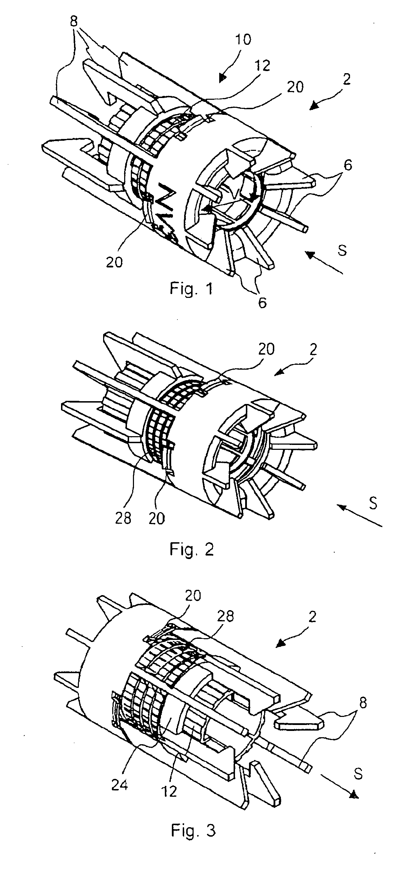

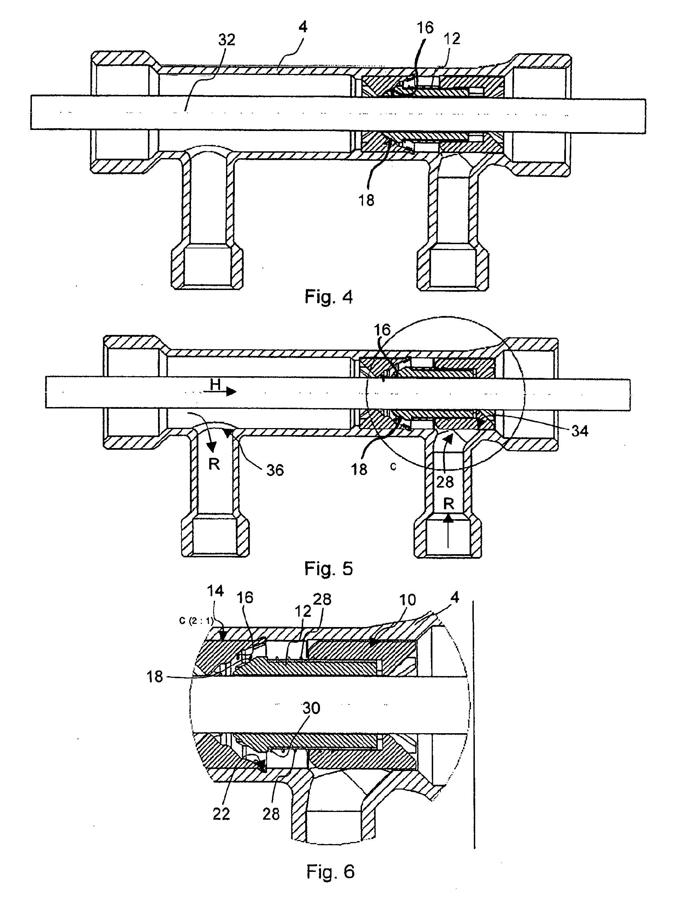

Die Figuren 1 bis 3 zeigen ein Einsatzteil 2, welches aus Metall oder Kunststoff gebildet sein kann und welches mit einer zylindrischen Außenumfangsfläche im Wesentlichen entsprechend einer zylindrischen Innenumfangsfläche eines Armaturengehäuses ausgeformt ist, welches in den Figuren 4 und 5 gezeigt und dort mit Bezugszeichen 4 gekennzeichnet ist. Der in den Figuren 1 bis 3 eingezeichnete Pfeil S verdeutlicht die Strömungsrichtung einer durch den Strang fließenden Hauptströmung, die in den Figuren 4 und 5 mit Bezugszeichen H gekennzeichnet ist. Die Strömung durch die Ringleitung ist mit Bezugszeichen H gekennzeichnet.

An seinem in Strömungsrichtung vorderen Ende weist das Einsatzteil 2 mehrere auf den Umfang verteilte Stege 6 auf, welche die zylindrische Außenumfangsfläche fortsetzen und an ihrem freien Ende trichterförmig nach innen gerichtet sind. Eine entsprechende Ausgestaltung weist auch das strömungsferne Ende auf. Dort sind die Stege mit Bezugszeichen 8 gekennzeichnet.

Dieser Bereich des Einsatzteiles 2 bildet ein Führungselement 10 für ein Drosselelement 12 aus. Zwischen den vorderen Stegen 6 und den hinteren Stegen 8 weist das Einsatzteil 2 einen Ringabschnitt 14 auf, dessen Innenumfangsfläche eine Kegelfläche 16 ausbildet, die mit einer Kegelgegenfläche 18 des Drosselelementes 12 zusammenwirkt. In der Schnittdarstellung wird ein durch den Ringabschnitt gebildeter Düsenquerschnitt, der in Bezug auf die Hauptströmung H eine Querschnittsverengung V bildet, von radial inwärtig von den Stegen 6 überragt. Mit anderen Worten hat die Düse an ihrer engsten Stelle einen größeren Durchmesser als die nach innen eingezogenen Stege 6, die einen Anschlag für das Drosselelement 1 bilden.

Im Bereich des in Strömungsrichtung hinteren Endes des Ringabschnitts 14 sind an der Außenumfangsfläche mehrere Rastnasen 20 ausgeformt, die in Rastnuten 22 in Eingriff sind, die an der Innenumfangsfläche des Armaturengehäuses 4 ausgespart sind. Stromabwärts der Rastnasen 20 und gehalten von jedem zweiten der hinteren Stege 8 ist ein Ring 24 vorgesehen, welcher das Drosselelement 12 umfasst und umfänglich führt, und eine Stützfläche 26 für ein Federelement 28 ausbildet, welches sich zwischen diesem Ring 24 und einer Ringfläche 30 des Drosselelementes 12 erstreckt, die sich in Strömungsrichtung unmittelbar hinter der Kegelgegenfläche 18 des Drosselelementes 12 anschließt.

Die kegelförmig nach innen zulaufenden freien Enden der Stege 6, 8 bilden bei dem gezeigten Ausführungsbeispiel eine trichterförmige Öffnung aus, die das Eindringen eines in den Figuren 4 und 5 gezeigten Innenrohres 32 eines Inliners erleichtert. Diese trichterförmige Öffnung hat einen Durchmesser in etwa entsprechend dem Außendurchmesser des Innenrohres 32. Der Innendurchmesser der Düse an ihrer engsten Stelle ist um etwa 15 bis 25 % größer als Durchmesser der trichterförmige Öffnung.

Das Innenrohr 32 durchsetzt eine mittlere Bohrung des Drosselelementes 12. Dieses ist vorliegend durch die Innenumfangsfläche des Ringes 24 und die sich in Strömungsrichtung S daran anschließenden Stege geführt. Ausgewählte Stege können in axiale Nuten eingreifen, die an der Außenumfangsfläche des Drosselelementes 12 ausgebildet sein können, wodurch eine Verdrehsicherung des Drosselelementes 12 gebildet ist.

Wie den Figuren 4 bis 6 zu entnehmen ist, befindet sich das Einsatzteil 2 mit seinem Führungselement 10 im Bereich einer Einfädelöffnung 34 einer nicht näher dargestellten Ringleitung, die stromaufwärts des Einsatzteiles 2 mit einer Ausfädelöffnung von dem Strang abgeht, zu einem oder mehreren Verbrauchern, beispielsweise einer Nasszelle in einem Hotel führt, und im Bereich der Anschlussarmatur in den Strang zurückgeführt wird. Die umfänglich beabstandeten hinteren Stege 8 bilden insofern einen Ringleitungsströmungsdurchlass 38 aus, durch den die Ringleitungsströmung radial nach innen fließen kann, um sich mit der Hauptströmung H zu vereinigen.

In der in Fig. 4 gezeigten Ausgangsstellung, bei welcher die Kegelgegenfläche 18 des Drosselelementes 12 an der Kegelfläche 16 des zylindrischen Abschnitts 14 anliegt, bleibt zwischen den benachbarten Kegelflächen 16, 18 ein Leckageströmungsspalt, so dass bei einer über der maximalen Querschnittsverengung wirkenden Druckdifferenz auch bei aneinanderliegenden Kegelflächen 16, 18 eine gewisse Leckageströmung möglich ist. Die Querschnittsverengung kann aber auch so sein, dass bei minimaler Druckdifferenz die Hauptströmung H abgeschnitten ist und der verbleibende Volumenstrom allein durch die Ringleitung fließt.

Mit zunehmender Druckdifferenz über der Querschnittsverengung wird das Drosselelement 14 gegen die Kraft des Federelementes 28 in Strömungsrichtung nach hinten gedrängt. Hierdurch wird die Querschnittsverengung V vergrößert, bis das Drosselelement gegen das stirnseitige Ende der durch das Führungselement 10 gebildeten Führung stößt. Dieses wird vorliegend durch hakenförmige radiale Vorsprünge 40 der hinteren Stege 8 geformt.

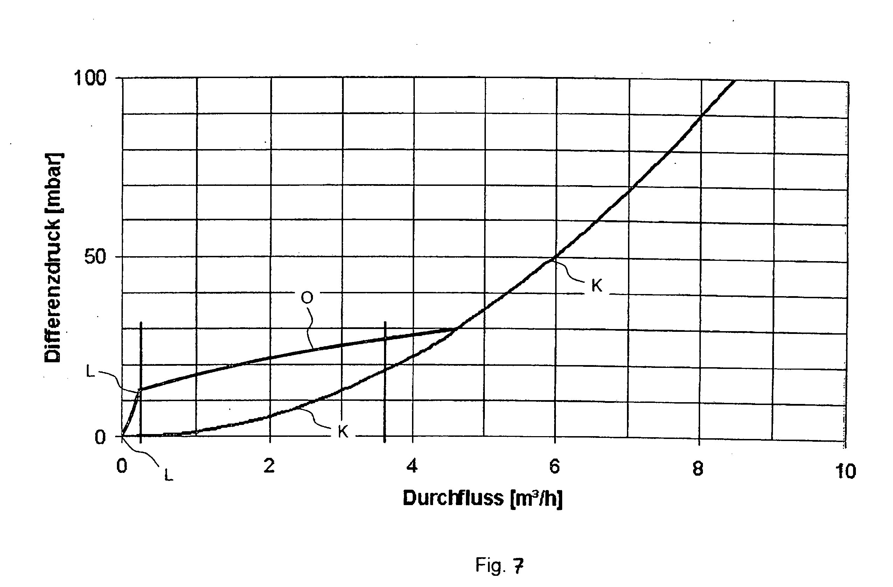

Die sich hierdurch ergebende Strömungscharakteristik in der Ringleitung ist in Fig. 7 im Vergleich zu einer herkömmlichen Strömungscharakteristik K einer konstanten Drossel verdeutlicht. Bei einer sehr kleinen Druckdifferenz im Strang von etwa 10 bis 20 mbar ergibt sich eine Leckageströmung, gekennzeichnet mit L. Bei Druckänderungen in diesem Bereich ergibt sich eine Strömungskennlinie entsprechend einer herkömmlichen Drossel, allerdings durch einen konstanten Strömungsquerschnitt, der durch den Leckageströmungsspalt gebildet ist.

Bei höheren Druckdifferenzen beginnt die Relativbewegung zwischen dem Drosselelement 12 und dem Einsatzteil 2, die in etwa bis zu einer Druckdifferenz von etwa 30 mbar möglich ist. Es ergibt sich in der Ringleitung ein insgesamt zum Vergleich zu einer Düse mit konstanter Querschnittsverengung eine höhere Durchströmung der Ringleitung. Erst bei einer Druckdifferenz oberhalb von 30 mbar ist das Drosselelement 12 in seiner Endlage, d. h. stößt gegen die Endfläche der Führung an, so dass eine weitere Erhöhung der Druckdifferenz zwischen Ausfädelöffnung und Einfädelöffnung in der Ringleitung zu einem herkömmlicher Strömungsverlauf K führt. Der Strömungsverlauf ist in einem Druckdifferenzbereich, bei dem sich das Drosselelement zunehmend von der Kegelfläche 14 wegschiebt, näherungsweise linear. Es besteht eine Korrelation, bei welcher die Druckdifferenz und die Strömung in der Ringleitung wie folgt korrelieren: $\Delta p \sim Q^{2/3}$ mit $\Delta p$ = Druckdifferenz zwi-

schen Ausfädelöffnung und Einfädelöffnung und Q = Durchflussmenge in m³/Std. in der Ringleitung. Diese Charakteristik ist in Fig. 7 mit D eingezeichnet. Unterhalb dieses Bereiches, d. h. im Bereich der Leckageströmung und bei einer Druckdifferenz von unterhalb etwa 13 mbar ergibt sich eine Abhängigkeit $\Delta p \sim Q^2$. Dieser Bereich ist - wie oben bereits eingeführt - mit L gekennzeichnet. Oberhalb des Kurvenabschnitts D ergibt sich eine entsprechende Abhängigkeit, allerdings aufgrund der nunmehr maximalen Querschnittsverengung bei maximal zurückgezogenem Drosselelement 12 mit wesentlich geringerem Anstieg der Durchflussmenge in der Ringleitung bei steigender Druckdifferenz (Kurvenverlauf K).

Der durchgehende Verlauf K von dem Ursprung der Grafik gemäß Fig. 7 in Nullpunkt entspricht im Übrigen der konventionellen Kennlinie einer Düse zur Erzeugung einer Zwangsdurchströmung in der Ringleitung, beispielsweise gemäß DE 39 19 074.

Bezugszeichenliste

| | |
|---|---|
| 2 | Einsatzteil |
| 4 | Armaturengehäuse |
| 6 | Stege |
| 8 | Stege |
| 10 | Führungselement |
| 12 | Drosselelement |
| 14 | Ringabschnitt |
| 16 | Kegelfläche |
| 18 | Kegelgegenfläche |
| 20 | Rastnasen |
| 22 | Rastnuten |
| 24 | Ring |
| 26 | Stützfläche |
| 28 | Federelement |
| 30 | Ringfläche |
| 32 | Innenrohr |
| 34 | Einfädelöffnung |
| 36 | Ausfädelöffnung |
| 38 | Ringleitungsströmungsdurchlass |
| 40 | radiale Vorsprünge der Stege 8 |

| | |
|---|---|
| D | Strömungscharakteristik bei variabler Durchtrittsfläche |
| K | konventionelle Strömungscharakteristik mit konstanter Durchtrittsfläche |
| H | Hauptströmung |
| L | Strömungscharakteristik bei Leckageströmung |
| R | Ringleitungsströmung |
| S | Strömung |
| V | Querschnittsverengung |

**Patentansprüche**

1. Anschlussarmatur zum Anschließen einer Ringleitung mit mindestens einem Verbraucher an einen Stockwerks- bzw. Steigrohrstrang mit an dem Strang anschließbaren Ein- und Auslassöffnungen, einer dazwischenliegenden Einfädelöffnung (34) für die Ringleitung, der in Strömungsrichtung (S) eine Querschnittsverengung (V) vorgelagert ist, welche durch den Venturi-Effekt in einem Bereich der Einfädelöffnung (34) einen niedrigeren Druck erzeugt, **gekennzeichnet durch**,
Mittel (12,28) zum Variieren der Durchtrittsfläche der Querschnittsverengung (V).

2. Anschlussarmatur nach Anspruch 1, **dadurch gekennzeichnet, dass** das Mittel ein bewegliches Drosselelement (12) umfasst, das relativ zu der Querschnittsverengung (V) bewegbar ist.

3. Anschlussarmatur nach Anspruch 2, **dadurch gekennzeichnet, dass** bei an der Querschnittsverengung (V) anliegendem Drosselelement (12) eine Leckageströmung (L) durch den Strang möglich ist.

4. Anschlussarmatur nach Anspruch 3, **dadurch gekennzeichnet, dass** das Drosselelement (12) in einer Ausgangslage im Bereich der Querschnittsverengung (V) unter Ausbildung eines Leckageströmungsspaltes gehalten ist.

5. Anschlussarmatur nach einem der Ansprüche 2 bis 4, **dadurch gekennzeichnet, dass** die Querschnittsverengung (V) durch einen Kegel gebildet ist und dass das Drosselelement (12) eine Kegelgegenfläche (18) ausbildet, die mit einer Kegelfläche (16) des Kegels zusammenwirkt.

6. Anschlussarmatur nach einem der Ansprüche 2 bis 5, **dadurch gekennzeichnet, dass** das Drosselelement (12) von einem Federelement (28) in der Ausgangslage gehalten ist.

7. Anschlussarmatur nach einem Ansprüche 2 bis 6, **dadurch gekennzeichnet, dass** das Mittel ein Führungselement (10) umfasst, welches das Drosselelement (12) beweglich hält.

8. Anschlussarmatur nach Anspruch 7, **dadurch gekennzeichnet, dass** das Führungselement (10) und das Drosselelement (12) koaxial zueinander ausgebildet sind und dass deren Längsachsen mit der Längsachse des Stranges fluchten.

9. Anschlussarmatur nach Anspruch 8, **dadurch gekennzeichnet, dass** das Führungselement (10) als Teil eines Einsatzteiles (2) ausgebildet ist, welches die Querschnittsverengung (V) ausbildet.

10. Anschlussarmatur nach Anspruch 9, **dadurch gekennzeichnet, dass** an dem Außenumfang des Einsatzteiles (2) Arretierungsmittel (20) vorgesehen sind, mit denen das Einsatzteil (2) in einem die Ein- und Auslassöffnungen sowie die dazwischenliegende Einfädelöffnung (34) ausbildenden Armaturgehäuse (4) der Anschlussarmatur gehalten sind.

11. Anschlussarmatur nach Anspruch 10, **dadurch gekennzeichnet, dass** das Arretierungsmittel durch mehrere in Umfangsrichtung des Einsatzteiles (2) voneinander beabstandete Rastnasen (20) ausgebildet ist und dass an der Innenumfangsfläche des Armaturgehäuses (4) Rastnuten (22) ausgeformt sind, in welche die Rastnasen (20) eingreifen.

12. Anschlussarmatur nach einem der Ansprüche 7 bis 11, **dadurch gekennzeichnet, dass** das Führungselement (10) sich im Bereich der Einfädelöffnung (34) erstreckt und an seiner Außenwandung wenigstens einen das Führungselement (10) durchsetzenden Ringleitungs-Strömungsdurchlass (38) aufweist.

13. Anschlussarmatur nach einem der Ansprüche 2 bis 12, **dadurch gekennzeichnet, dass** das Drosselelement (12) eine in seiner Längsrichtung verlaufende durchgehende Bohrung aufweist, durch welche ein Innenrohr (32) einer Rohr-in-Rohr-Zirkulationsleitung durchführbar ist.

14. Anschlussarmatur nach einem der Anspruch 13, **dadurch gekennzeichnet, dass** das Innenrohr (32) das Drosselelement (12) verschieblich führt.

15. Anschlussarmatur nach Anspruch 13 oder 14, **dadurch gekennzeichnet, dass** das Einsatzteil (2) an wenigstens einem seiner stirnseitigen Enden mehrere die Außenumfangsfläche des Einsatzteiles (2) vorgebende und sich in axialer Richtung erstreckende Stützstege (6, 8) aufweist, deren jeweilige Enden trichterförmig ausgebildet sind.

16. Anschlussarmatur nach einem der vorherigen Ansprüche, **dadurch gekennzeichnet, dass** bei einer Druckdifferenz ($\Delta$p) zwischen Eintritts- und Auslassöffnung von

    - 20 mbar oder weniger, vorzugsweise 10 mbar oder weniger und/oder
    - ungefähr 30 mbar oder mehr,
die Druckdifferenz ($\Delta$p) der folgenden Beziehung folgt:

$$\Delta p \sim Q^2,$$

wobei Q die Durchflussmenge in $m^3$/Std. in der Ringleitung beschreibt.

17. Anschlussarmatur nach einem der vorherigen Ansprüche, **dadurch gekennzeichnet, dass** bei einer Druckdifferenz ($\Delta$p) zwischen der Eintritts- und Auslassöffnung von 30 mbar oder weniger, vorzugsweise 20 mbar oder weniger, die Druckdifferenz ($\Delta$p) der folgenden Beziehung folgt:

$$\Delta p \sim Q^n,$$

wobei $0{,}6 \leq n \leq 1$, vorzugsweise n = 2/3 und Q die Durchflussmenge in $m^3$/Std. in der Ringleitung beschreibt.

18. Wasserleitungsanlage mit wenigstens einem Stockwerks- bzw. Steigrohrstrang an dem mehrere Ringleitungen über Ausfädel- und Einfädelöffnungen (34) angeschlossen sind, und einer zwischen den Ausfädel- und Einfädelöffnungen der zugeordneten Ringleitung im Strang vorgesehenen Querschnittsverengung (V) welche durch den Venturi-Effekt in einem Bereich der jeweiligen Einfädelöffnung (34) einen niedrigeren Druck erzeugt,
**gekennzeichnet durch,**
Mittel (12, 28) zum Variieren der Durchtrittsfläche der Querschnittsverengung (V).

**Claims**

1. Connection fitting for the connection of a ring main with at least one consumer to a storey or rising main branch with inlet and outlet openings which can be connected to the branch, an intervening merge opening (34) for the ring main which is preceded in the flow direction (S) by a cross-section constriction (V), which generates, caused by the Venturi effect a lower pressure in a region of the merge opening (34), **characterised by**
means (12, 28) for varying the passage area of the cross-section constriction (V).

2. Connection fitting according to Claim 1, **characterised in that** the means comprise a movable throttle element (12), which can move relative to the cross-section constriction (V).

3. Connection fitting according to Claim 2, **characterised in that** with a throttle element (12) contacting the cross-section constriction (V) a leakage flow (L) through the branch is possible.

4. Connection fitting according to Claim 3, **characterised in that** the throttle element (12) is held in an initial position in the region of the cross-section constriction (V) with the formation of a leakage flow gap.

5. Connection fitting according to any one of the Claims 2 to 4, **characterised in that** the cross-section constriction (V) is formed by a cone and that the throttle element (12) forms a conical counter surface (18), which interacts with a conical surface (16) of the cone.

6. Connection fitting according to any one of the Claims 2 to 5, **characterised in that** the throttle element (12) is held by a spring element (28) in the initial position.

7. Connection fitting according to any one of the Claims 2 to 6, **characterised in that** the means comprise a guide element (10) which movably holds the throttle element (12).

8. Connection fitting according to Claim 7, **characterised in that** the guide element (10) and the throttle element (12) are formed coaxially with respect to one another and that their longitudinal axes are in alignment with the longitudinal axis of the branch.

9. Connection fitting according to Claim 8, **characterised in that** the guide element (10) is formed as part of an insertion part (2), which forms the cross-section constriction (V).

10. Connection fitting according to Claim 9, **characterised in that** on the external circumference of the insertion part (2) locking means (20) are provided with which the insertion part (2) is held in a fitting housing (4) of the connection fitting, forming the inlet and outlet openings as well as the intervening merge opening (34).

11. Connection fitting according to Claim 10, **characterised in that** the locking means is formed by several latching lugs (20), spaced from one another in the circumferential direction of the insertion part (2), and that on the internal circumferential surface of the fitting housing (4) latching grooves (22) are formed, in which the latching lugs (20) engage.

12. Connection fitting according to any one of the Claims 7 to 11, **characterised in that** the guide element (10) extends in the region of the merge opening (34) and on its outer wall has at least one ring main flow outlet (38) passing through the guide element (10).

13. Connection fitting according to any one of the Claims 2 to 12, **characterised in that** the throttle element (12) has a through hole running in its longitudinal direction, through which an inner pipe (32) of a pipe-in-pipe circulation pipe can be passed.

14. Connection fitting according to Claim 13, **characterised in that** the inner pipe (32) movably guides the throttle element (12).

15. Connection fitting according to Claim 13 or 14, **characterised in that** the insertion part (2) has on at least one of its face-side ends several supporting ridges (6, 8) defining the external circumferential surface of the insertion part (2) and extending in the axial direction, the respective ends of the said supporting ridges being formed with a funnel shape.

16. Connection fitting according to any one of the aforementioned claims, **characterised in that** with a pressure difference ($\Delta p$) between the inlet and outlet openings of

    - 20 mbar or less, preferably 10 mbar or less and/or
    - approximately 30 mbar or more,
the pressure difference ($\Delta p$) has the following relationship:

$$\Delta p \sim Q^2,$$

where Q is the flow rate in $m^3/h$ in the ring main.

17. Connection fitting according to any one of the aforementioned claims, **characterised in that** with a pressure difference ($\Delta p$) between the inlet and outlet openings of 30 mbar or less, preferably 20 mbar or less, the pressure difference ($\Delta p$) has the following relationship:

$$\Delta p \sim Q^n,$$

where $0.6 \leq n \leq 1$, preferably n = 2/3 and Q is the flow rate in $m^3/h$ in the ring main.

18. Water pipe system with at least one storey or rising main branch to which several ring mains are connected via separation and merge openings (34) and a cross-section constriction (V) provided between the separation and merge openings of the assigned ring main in the branch, which cross-section constriction (V), which generates, caused by the Venturi effect a lower pressure in a region of the merge opening (34), **characterised by** means (12, 28) for varying the passage area of the cross-section constriction (V).

## Revendications

1. Raccord de branchement pour raccorder une conduite en boucle avec au moins un élément consommateur à une canalisation de distribution d'étage ou de colonne montante, comprenant des ouvertures d'entrée et de sortie pouvant être raccordées à la canalisation, et, située entre-elles, une ouverture d'insertion (34) pour la conduite en boucle, qui est précédée, dans la direction d'écoulement (S), par un rétrécissement de section transversale (V) produisant, par effet Venturi, une pression plus basse dans une zone de l'ouverture d'insertion (34), **caractérisé par**

des moyens (12, 28) pour faire varier la surface de passage du rétrécissement de section transversale (V).

2. Raccord de branchement selon la revendication 1, **caractérisé en ce que** ledit moyen comprend un élément d'étranglement (12) mobile, qui est déplaçable par rapport au rétrécissement de section transversale (V).

3. Raccord de branchement selon la revendication 2, **caractérisé en ce que** lorsque l'élément d'étranglement (12) est en appui contre le rétrécissement de section transversale (V), un écoulement de fuite (L) est possible à travers la canalisation.

4. Raccord de branchement selon la revendication 3, **caractérisé en ce que** l'élément d'étranglement (12) est maintenu dans une position initiale, dans la zone du rétrécissement de section transversale (V), en formant un interstice d'écoulement de fuite.

5. Raccord de branchement selon l'une des revendications 2 à 4, **caractérisé en ce que** le rétrécissement de section transversale (V) est formé par un cône, et **en ce que** l'élément d'étranglement (12) forme une surface conique conjuguée (18), qui interagit avec une surface conique (16) du cône.

6. Raccord de branchement selon l'une des revendications 2 à 5, **caractérisé en ce que** l'élément d'étranglement (12) est maintenu dans la position initiale par un élément de ressort (28).

7. Raccord de branchement selon l'une des revendications 2 à 6, **caractérisé en ce que** ledit moyen comprend un élément de guidage (10), qui maintient mobile l'élément d'étranglement (12).

8. Raccord de branchement selon la revendication 7, **caractérisé en ce que** l'élément de guidage (10) et l'élément d'étranglement (12) sont réalisés mutuellement coaxiaux, et **en ce que** leurs axes longitudinaux sont confondus avec l'axe longitudinal de la canalisation.

9. Raccord de branchement selon la revendication 8, **caractérisé en ce que** l'élément de guidage (10) est réalisé en tant que partie d'une pièce d'insert (2), qui forme le rétrécissement de section transversale (V).

10. Raccord de branchement selon la revendication 9, **caractérisé en ce que** sur la périphérie extérieure de la pièce d'insert (2) sont prévus des moyens d'arrêt (20) à l'aide desquels la pièce d'insert (2) est maintenue dans un carter de raccord (4) du raccord de branchement, qui forme les ouvertures d'entrée et de sortie ainsi que l'ouverture d'insertion (34) située entre elles.

11. Raccord de branchement selon la revendication 10, **caractérisé en ce que** ledit moyen d'arrêt est formé par plusieurs crans d'encliquetage (20) espacés les uns des autres dans la direction périphérique de la pièce d'insert (2), et **en ce que** sur la surface périphérique intérieure de carter de raccord (4), sont formées des rainures d'encliquetage (22) dans lesquelles viennent engrener les crans d'encliquetage (20).

12. Raccord de branchement selon l'une des revendications 7 à 11, **caractérisé en ce que** l'élément de guidage (10) s'étend dans la zone de l'ouverture d'insertion (34) et présente, sur sa paroi extérieure, au moins un passage d'écoulement de conduite en boucle (38) traversant l'élément de guidage (10).

13. Raccord de branchement selon l'une des revendications 2 à 12, **caractérisé en ce que** l'élément d'étranglement (12) présente un alésage traversant et s'étendant dans sa direction longitudinale, alésage à travers lequel peut passer un tube intérieur (32) d'une conduite de circulation à tube dans un tube.

14. Raccord de branchement selon la revendication 13, **caractérisé en ce que** le tube intérieur (32) guide en coulissement l'élément d'étranglement (12).

15. Raccord de branchement selon la revendication 13 ou la revendication 14, **caractérisé en ce que** la pièce d'insert (2) présente, à au moins l'une de ses extrémités frontales, plusieurs nervures de support (6, 8) prescrivant la surface périphérique extérieure de la pièce d'insert (2) et s'étendant dans la direction axiale, et dont les extrémités respectives sont conçues en forme d'entonnoir.

16. Raccord de branchement selon l'une des revendications précédentes, **caractérisé en ce que** dans le cas d'une différence de pression ($\Delta$p) entre l'ouverture d'entrée et l'ouverture de sortie, de

- 20 mbar ou moins, de préférence 10 mbar ou moins, et/ou
- d'environ 30 mbar ou plus,
la différence de pression ($\Delta$p) satisfait à la rela-

tion suivante :

$$\Delta p \sim Q^2,$$

Q définissant le débit en m$^3$/heure dans la conduite en boucle.

**17.** Raccord de branchement selon l'une des revendications précédentes, **caractérisé en ce que** dans le cas d'une différence de pression ($\Delta p$) entre l'ouverture d'entrée et l'ouverture de sortie, de 30 mbar ou moins, de préférence de 20 mbar ou moins, la différence de pression ($\Delta p$) satisfait à la relation suivante :

$$\Delta p \sim Q^n,$$

avec $0{,}6 \leq n \leq 1$, de préférence n = 2/3, et Q définissant le débit en m$^3$/heure dans la conduite en boucle.

**18.** Installation de conduites de distribution d'eau comprenant au moins une canalisation de distribution d'étage ou de colonne montante, à laquelle sont raccordées plusieurs conduites en boucle par l'intermédiaire d'ouvertures d'insertion et d'extraction (34), et comprenant également un rétrécissement de section transversale (V), qui est prévu dans la canalisation entre les ouvertures d'insertion et d'extraction de la conduite en boucle associée, et qui produit, par effet Venturi, une pression plus basse dans une zone de l'ouverture d'insertion (34) considérée,
**caractérisée par**
des moyens (12, 28) pour faire varier la surface de passage du rétrécissement de section transversale (V).

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3919074

- US 5622203 A